# FASCICULE DE BREVET EUROPEEN

(11) **EP 4 634 502 B1**
(45) Date de publication et mention de la délivrance du brevet: **11.11.2026**
(21) Numéro de dépôt: 23836556.3
(22) Date de dépôt: 11.12.2023
(51) Int. Cl.: F02C 3/113, F02C 6/20, F02C 7/36

(54) **TRANSFERT DE PUISSANCE ENTRE UN CORPS HAUTE PRESSION ET UN CORPS BASSE PRESSION D'UNE TURBOMACHINE D'UN AÉRONEF**
LEISTUNGSÜBERTRAGUNG ZWISCHEN EINEM HOCHDRUCKKÖRPER UND EINEM NIEDERDRUCKKÖRPER EINES FLUGZEUGTURBINENMOTORS
TRANSFER OF POWER BETWEEN A HIGH-PRESSURE BODY AND A LOW-PRESSURE BODY OF AN AIRCRAFT TURBINE ENGINE

(30) Priorité: 14.12.2022 FR 2213394
(43) Date de publication de la demande: 22.10.2025
(73) Titulaire: Safran Helicopter Engines, 64510 Bordes (FR)
(72) Inventeur: BEDDOK, Stéphane Meyer, 77550 MOISSY-CRAMAYEL (FR); LEMAY, David Bernard Martin, 77550 MOISSY-CRAMAYEL (FR); MARIN, Jean-Philippe Jacques, 77550 MOISSY-CRAMAYEL (FR)
(74) Mandataire: Gevers & Orès
(86) Numéro de dépôt international: PCT/FR2023/051970
(87) Numéro de publication internationale: WO 2024/126933

(56) Documents cités:
- EP-B1- 3 830 399
- EP-B1- 3 873 810
- FR-A1- 3 103 647

## Description

### Domaine technique de l'invention

La présente invention concerne le transfert de puissance entre un corps haute pression et un corps basse pression d'une turbomachine d'un aéronef. Elle concerne également un aéronef comportant une telle installation, ainsi qu'un procédé de transferts de puissance correspondant.

### Arrière-plan technologique

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux actuellement en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des impacts environnementaux modérés dans un but d'amélioration de l'efficacité énergétique des avions.

Par voie de conséquence, la Déposante travaille en permanence à la réduction de son impact climatique par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

Il est connu d'utiliser une installation de transfert d'une puissance entre un corps haute pression et un corps basse pression d'une turbomachine d'un aéronef, comportant :
- un réseau électrique conçu pour présenter une tension continue ;
- un premier système électromécanique connecté au réseau électrique et couplé au corps haute pression ; et
- un deuxième système électromécanique connecté au réseau électrique et couplé au corps basse pression.

La puissance peut être transférée sélectivement dans un sens et dans l'autre au sein de l'installation de transfert de puissance, au travers du réseau électrique, appelé réseau électrique de transfert. En revanche, le réseau électrique de transfert peut être en outre utilisé pour alimenter un réseau électrique non propulsif de l'aéronef. Dans ce cas, l'installation de transfert de puissance fournit la puissance électrique demandée par le réseau électrique non propulsif, et il s'agit d'un transfert de puissance unidirectionnel.

Il convient alors d'éviter des situations de dysfonctionnement correspondant à un transfert de puissance inadapté ou bien à un déséquilibre entre la puissance électrique générée par le réseau électrique de transfert et la puissance consommée par les charges du réseau électrique non propulsif de l'aéronef, car cela peut conduire à déstabiliser le réseau électrique, jusqu'à le faire « chuter ». La vitesse de déstabilisation du réseau électrique de transfert de puissance est d'autant plus élevée que la puissance transférée entre les deux systèmes électromécaniques ou bien vers les charges électriques non propulsives de l'aéronef est importante.

Pour éviter une telle déstabilisation du réseau électrique de transfert de puissance, ce dernier peut être connecté à des batteries qui vont permettre de fournir ou d'absorber de la puissance au/du réseau électrique, lorsqu'il y a un déséquilibre entre la puissance fournie par la génératrice et la puissance consommée par les charges. Cela amène des problématiques d'intégration de telles batteries dans l'environnement moteur, et ajoute nécessairement de la masse.

Les brevets européen EP 3 830 399 B1 et EP 3 873 810 B1, ainsi que la demande de brevet français FR 3 103 647 A1, décrivent chacun deux systèmes électromécaniques connectés à un réseau électrique et respectivement couplés à un corps haute pression et à un corps basse pression d'une turbomachine.

Il peut ainsi être souhaité de prévoir une installation de transfert de puissance qui permette de s'affranchir d'au moins une partie des problèmes et contraintes précités.

### Résumé de l'invention

A cet effet, l'invention est le résultat des recherches technologiques visant à améliorer de manière très significative les performances des avions et, en ce sens, contribue à la réduction de l'impact environnemental des avions. Pour cela, il est donc proposé une installation de transfert d'une puissance entre un corps haute pression et un corps basse pression d'une turbomachine d'un aéronef, comportant :
- un réseau électrique conçu pour présenter une tension continue ;
- un premier système électromécanique connecté au réseau électrique et couplé au corps haute pression ; et
- un deuxième système électromécanique connecté au réseau électrique et couplé au corps basse pression ;
caractérisée en ce qu'elle comporte en outre :
- un système de contrôle conçu pour contrôler au moins l'un parmi les premier et deuxième systèmes électromécaniques afin de réguler la puissance transférée et pour contrôler au moins l'autre parmi les premier et deuxième systèmes électromécaniques afin de réguler la tension continue.

Ainsi, grâce à l'invention, la tension continue du réseau électrique est régulée afin de rester dans les limites opérationnelles des systèmes électromécaniques, sans nécessiter de batterie de grande capacité et tout en assurant le transfert de la puissance souhaitée.

L'invention peut en outre comporter l'une ou plusieurs des caractéristiques optionnelles suivantes, selon toute combinaison techniquement possible.

De façon optionnelle, le système de contrôle est conçu, d'une part, lorsque la puissance est transférée du corps haute pression au corps basse pression, pour contrôler uniquement le premier système électromécanique afin de réguler la puissance transférée et uniquement le deuxième système électromécanique afin de réguler la tension continue et, d'autre part, lorsque la puissance est transférée du corps basse pression au corps haute pression, pour contrôler uniquement le deuxième système électromécanique afin de réguler la puissance transférée et uniquement le premier système électromécanique afin de réguler la tension continue.

De façon optionnelle également, le système de contrôle est conçu pour contrôler uniquement l'un parmi les premier et deuxième systèmes électromécaniques afin de réguler la puissance transférée et pour contrôler uniquement l'autre parmi les premier et deuxième systèmes électromécaniques afin de réguler la tension continue, aussi bien lorsque la puissance est transférée du corps haute pression au corps basse pression que lorsque la puissance est transférée du corps basse pression au corps haute pression.

De façon optionnelle également, le système de contrôle est conçu pour contrôler uniquement le premier système électromécanique afin de réguler la puissance transférée et pour contrôler uniquement le deuxième système électromécanique afin de réguler la tension continue, aussi bien lorsque la puissance est transférée du corps haute pression au corps basse pression que lorsque la puissance est transférée du corps basse pression au corps haute pression.

De façon optionnelle également, le système de contrôle est conçu pour contrôler les premier et deuxième systèmes électromécaniques afin de réguler la puissance transférée ou bien pour contrôler les premier et deuxième systèmes électromécaniques afin de réguler la tension réseau continue.

De façon optionnelle également, le premier système électromécanique comporte un premier convertisseur électrique continu/alternatif connecté au réseau électrique continu et une première machine électrique connectée au premier convertisseur électrique et couplée au corps haute pression, le système de contrôle comporte un premier module de contrôle conçu pour contrôler le premier convertisseur électrique continu/alternatif à partir d'une consigne de courant de la première machine électrique, le deuxième système électromécanique comporte un deuxième convertisseur électrique continu/alternatif connecté au réseau électrique continu et une deuxième machine électrique connectée au deuxième convertisseur électrique et couplée au corps basse pression, et le système de contrôle comporte un deuxième module de contrôle conçu pour contrôler le deuxième convertisseur électrique continu/alternatif à partir d'une consigne de courant de la deuxième machine électrique.

De façon optionnelle également, le système de contrôle comporte : - un premier module de consigne conçu pour calculer des première et deuxième consignes partielles de régulation de la tension réseau continue ; - un deuxième module de consigne conçu pour calculer des première et deuxième consignes partielles de régulation de la puissance transférée ; - un premier module d'addition conçu pour additionner les deux premières consignes partielles pour fournir une consigne de courant pour le premier module de contrôle ; et - un deuxième module d'addition conçu pour additionner les deux deuxièmes consignes partielles pour fournir une consigne de courant pour le deuxième module de contrôle.

De façon optionnelle également, le premier module de consigne est conçu pour recevoir un premier coefficient pour calculer les première et deuxième consignes partielles de régulation de la tension réseau continue et le deuxième module de consigne est conçu pour recevoir un deuxième coefficient pour calculer les première et deuxième consignes partielles de régulation de la puissance transférée, les premier et deuxième coefficients pouvant varier dans le temps.

Il est également proposé un aéronef comportant :
- une turbomachine comportant un corps haute pression et un corps basse pression ; et
- une installation de transfert d'une puissance entre le corps haute pression et le corps basse pression, selon l'invention.

Il est également proposé un procédé de transfert d'une puissance entre un corps haute pression et un corps basse pression d'une turbomachine d'un aéronef, comportant :
- un transfert de la puissance au travers de premier et deuxième systèmes électromécaniques respectivement couplés au corps haute pression et au corps basse pression et d'un réseau électrique conçu pour présenter une tension continue et auquel les premier et deuxième systèmes électromécaniques sont connectés ;
caractérisé en ce qu'il comporte en outre, pendant le transfert de la puissance :
- un contrôle d'au moins l'un parmi les premier et deuxième systèmes électromécaniques afin de réguler la puissance transférée ; et
- un contrôle d'au moins l'autre parmi les premier et deuxième systèmes électromécaniques afin de réguler la tension continue.

### Brève description des figures

L'invention sera mieux comprise à l'aide de la description qui va suivre, donnée uniquement à titre d'exemple et faite en se référant aux dessins annexés dans lesquels :
- la figure 1 est une vue fonctionnelle d'un aéronef comportant une turbomachine et une installation selon l'invention de transfert de puissance entre un corps haute pression et un corps basse pression de la turbomachine,
- la figure 2 est une vue fonctionnelle d'un système de contrôle de deux systèmes électromécaniques respectivement couplés aux corps haute pression et basse pression, selon un premier mode de réalisation de l'invention,
- la figure 3 est une vue fonctionnelle d'un système de contrôle de deux systèmes électromécaniques respectivement couplés aux corps haute pression et basse pression, selon un deuxième mode de réalisation de l'invention,
- la figure 4 est une vue fonctionnelle d'un système de contrôle de deux systèmes électromécaniques respectivement couplés aux corps haute pression et basse pression, selon un troisième mode de réalisation de l'invention, et
- la figure 5 est un schéma bloc des étapes d'un procédé selon l'invention.

### Description détaillée de l'invention

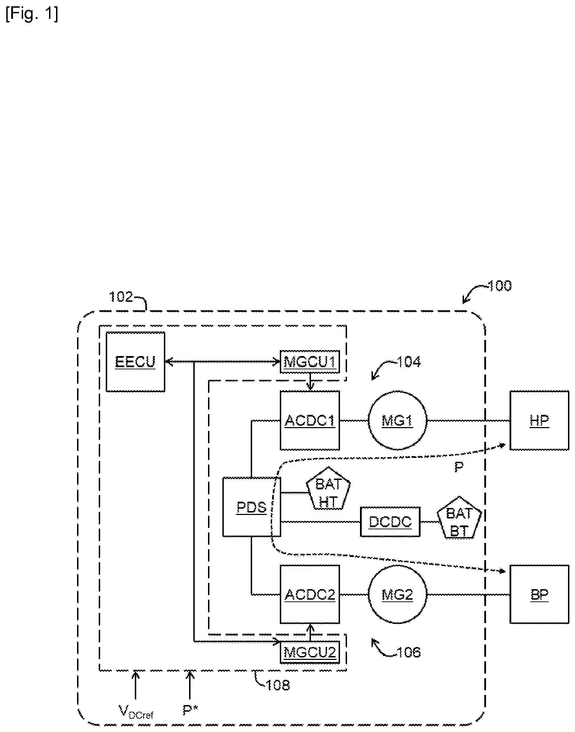

En référence à la figure 1, un exemple d'une turbomachine 100 d'un aéronef dans lequel l'invention est mise en oeuvre, va à présent être décrit.

La turbomachine 100 comporte un corps haute pression HP (appelé par la suite simplement corps HP) et un corps basse pression BP (appelé par la suite simplement corps BP). Le corps HP peut être un corps compresseur-turbine et le corps BP peut être un corps turbine (lorsque la turbomachine est un turbomoteur) entraînant une turbine dite libre ou bien un fan (lorsque la turbomachine est un turbofan).

La turbomachine 100 comporte en outre une installation 102 de transfert d'une puissance P entre le corps HP et le corps BP. La puissance P peut être sélectivement transférée du corps HP au corps BP et inversement. Le signe de la puissance P peut par exemple indiquer le sens de transfert. Le corps où la puissance est prélevée est appelé par la suite « corps source » et le corps où la puissance est transférée est appelé par la suite « corps destination ».

Ce transfert de puissance peut par exemple être utilisé pour améliorer la durée de vie de la turbomachine, c'est-à-dire pour reculer le moment où une maintenance sera nécessaire. En effet, la turbomachine subit généralement une fatigue oligo-cyclique dépendant principalement des variations de la vitesse N1 et/ou une fatigue en fluage dépendant principalement de la température T45 et de la vitesse N1. Ces deux fatigues sont respectivement mesurées par deux compteurs, généralement appelés DDV1 et DDV2. Lorsqu'un de ces compteurs atteint un seuil prédéfini respectif, la durée de vie de la turbomachine est épuisée et la maintenance doit être effectuée.

Ainsi, le transfert de puissance peut être utilisé pour limiter l'amplitude des variations de la vitesse N1 ou bien le maximum de température T45 et de vitesse N1, afin de ralentir le compteur risquant d'atteindre en premier son seuil de fin de durée de vie.

L'installation 102 comporte un réseau électrique PDS conçu pour présenter une tension continue V_{DC}. La tension continue V_{DC} est par exemple une haute tension, par exemple supérieure à 100 V, par exemple de 270 V.

L'aéronef 100 peut comporter des charges électriques (non représentées) connectées au réseau électrique PDS pour être alimentées électriquement par ce dernier, ainsi qu'une batterie connectée au réseau électrique PDS pour fournir à ce dernier de l'énergie électrique ou bien en prélever pour se recharger. Par exemple, il peut être prévu une batterie haute tension BAT_HT directement connectée au réseau électrique PDS et/ou une batterie basse tension, par exemple de moins de 100 V, par exemple de 28 V, connectée au réseau électrique PDS au travers d'un convertisseur continu/continu DCDC de l'aéronef 100.

L'installation 102 comporte en outre un système électromécanique 104 connecté au réseau électrique PDS et couplé au corps HP. Plus précisément, le système électromécanique 104 comporte un convertisseur électrique continu/alternatif ACDC1 (appelé par la suite simplement convertisseur ACDC1 ) connecté au réseau électrique PDS et une machine électrique MG1 (appelée par la suite simplement machine MG1) connectée au convertisseur ACDC1 et couplée au corps HP.

L'installation 102 comporte en outre un système électromécanique 106 connecté au réseau électrique PDS et couplé au corps BP. Plus précisément, le système électromécanique 106 comporte un convertisseur électrique continu/alternatif ACDC2 (appelé par la suite simplement convertisseur ACDC2) connecté au réseau électrique PDS et une machine électrique MG2 (appelée par la suite simplement machine MG2) connectée au convertisseur ACDC2 et couplée au corps BP.

Chacune des machines électriques MG1, MG2 peut être par exemple une machine à courant continu (alimentée dans ce cas par un régulateur électrique continu à la place du convertisseur alternatif/continu ACDC1, ACDC2), une machine synchrone à aimants permanents ou bien à excitation séparée (rotor bobiné ou bien massif), ou bien une machine à induction (asynchrone). Les machines électriques MG1, MG2 peuvent avoir des caractéristiques différentes. Par exemple, leurs vitesses de rotation nominales peuvent être différentes puisque les corps HP et le corps BP n'ont généralement pas les mêmes vitesses. Leurs poids et/ou volumes peuvent également être différents. Il est même possible qu'elles soient de technologies différentes (par exemple, une synchrone et l'autre asynchrone).

Ainsi, pour transférer la puissance P, le système électromécanique 104, 106 associé au corps source est contrôlé pour que sa machine MG1, MG2 fonctionne en générateur et son convertisseur ACDC1, ACDC2 fonctionne en redresseur. L'autre système électromécanique 104, 106 associé au corps destination est alors contrôlé pour que sa machine MG1, MG2 fonctionne en moteur et son convertisseur ACDC1, ACDC2 fonctionne en onduleur. La puissance P est ainsi acheminée du corps source au corps destination au travers du réseau électrique PDS.

L'installation 102 comporte en outre un système 108 de contrôle des premier et deuxième systèmes électromécaniques 104, 106, afin de respecter une consigne V_{DCref} de la tension continue V_{DC} et une consigne P* de puissance P à transférer. La consigne V_{DCref} de la tension continue V_{DC} peut par exemple être augmentée pour favoriser la charge de la batterie BAT_HT. De manière générale, la consigne de tension V_{DCref} peut être fixe ou bien variable dans le temps, par exemple pour contrôler la charge ou la décharge de la batterie BAT_HT.

Pour respecter ces consignes V_{DCref}, P*, le système de contrôle 108 est conçu pour contrôler au moins l'un parmi les premier et deuxième systèmes électromécaniques afin de réguler la puissance P à la consigne P* et pour contrôler au moins l'autre parmi les premier et deuxième systèmes électromécaniques afin de réguler la tension continue V_{DC} à la consigne V_{DCref}.

Le système de contrôle 108 est plus précisément conçu pour contrôler les convertisseurs ACDC1, ACDC2, par exemple en leur fournissant des signaux à largeur d'impulsion variable PWM1, PWM2.

Comme cela sera décrit plus en détail par la suite, le système de contrôle 108 comporte plusieurs modules pouvant par exemple être implémentés dans une unité de régulation de la turbomachine EECU (sigle de l'anglais « Engine Electronic Control Unit ») encore appelée ECU (sigle de l'anglais « Engine Control Unit ») ou bien FADEC (sigle de l'anglais « Full Authority Digital Engine Control ») et/ou dans des unités de contrôle MGCU1, MGCU2 des convertisseurs électriques continu/alternatif ACDC1, ACDC2 (MGCU étant le sigle de l'anglais « Motor/Generator Control Unit »). Cependant, cette organisation est purement indicative et d'autres arrangements pourraient être envisagés.

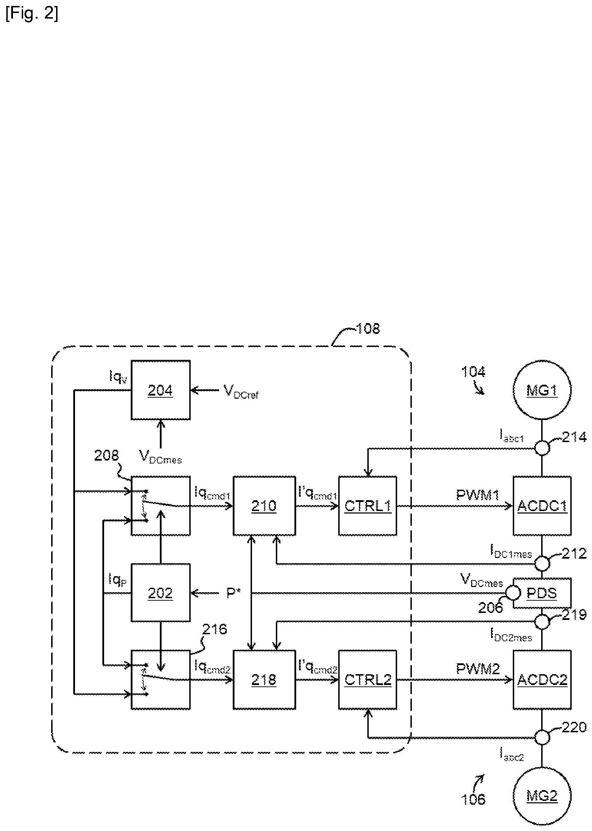

En référence à la figure 2, dans un premier mode de réalisation de l'invention, le système de contrôle 108 est tout d'abord conçu pour contrôler uniquement le système électromécanique 104, 106 associé au corps source (« uniquement » signifiant « et pas l'autre système électromécanique ») pour :
- d'une part, que sa machine MG1, MG2 fonctionne en générateur ; et
- d'autre part, réguler la tension continue V_{DC} à la consigne V_{DCref}.

Le système de contrôle 108 est en outre conçu pour contrôler uniquement l'autre système électromécanique 104, 106 associé au corps destination (« uniquement » signifiant et pas le premier système électromécanique ») pour :
- d'une part, que sa machine MG1, MG2 fonctionne en moteur ; et
- d'autre part, réguler la puissance P transférée à la consigne P*.

Ainsi, lorsque le transfert de puissance change de sens, chaque système électromécanique 104, 106 bascule entre une régulation de la tension continue V_{DC} et une régulation de la puissance P.

Pour mettre en oeuvre cette bascule, le système de contrôle 108 comporte par exemple un module de consigne 202 conçu pour convertir la consigne de puissance P* en une consigne de courant pour le système électromécanique 104, 106 associé au corps destination. Cette consigne est par exemple une consigne de courant en quadrature de la machine MG1, MG2 associée au corps destination. Dans ce cas, la consigne de courant est une consigne de courant en quadrature, notée Iq_{P}. La notion de courant de quadrature est connue en soi et est par exemple décrite dans l'article de Wikipédia sur le contrôle vectoriel des machines électriques (https://en.wikipedia.ora/wiki/Vector control (motor)).

La consigne de courant est par exemple déterminée en fonction de caractéristiques et/ou d'une vitesse de rotation rotorique de la machine électrique MG1, MG2 associée au corps destination. Ainsi, la consigne de courant change lorsque la destination du transfert de puissance change. La vitesse de rotation rotorique peut être mesurée, directement ou bien indirectement, ou bien être considérée comme constante.

Le système de contrôle 108 comporte en outre un module de consigne 204 conçu pour calculer, à partir de la consigne V_{DCref} et d'une mesure V_{DCmes} de la tension continue V_{DC}, une consigne de courant pour un courant du système électromécanique 104, 106 associé au corps source, la tension continue V_{DC} variant en fonction de ce courant. Ce courant est par exemple un courant en quadrature de la machine MG1, MG2 du système électromécanique 104, 106. Dans ce cas, la consigne de courant est une consigne de courant en quadrature, noté Iq_{V}. Pour réaliser la mesure de tension, l'installation 102 comporte ainsi par exemple un dispositif de mesure 206 sur le réseau électrique PDS.

Le système de contrôle 108 comporte en outre par exemple un module de sélection 208 conçu pour sélectionner la consigne Iq_{V} lorsque la machine MG1 doit fonctionner en génératrice et la consigne Iq_{P} lorsque la machine MG1 doit fonctionner en moteur. Le module de sélection 208 fournit ainsi une consigne de courant Iq_{cmd1} égale à la consigne sélectionnée, c'est-à-dire soit la consigne Iq_{V} soit la consigne Iq_{P}.

Le système de contrôle 108 comporte en outre un limiteur 210 conçu pour limiter la consigne de courant Iq_{cmd1} pour fournir une consigne de courant l'_{qcmd1}, suivant par exemple la mesure V_{DCmes} de la tension continue V_{DC} et/ou une mesure I_{DC1mes}, par un dispositif de mesure 212, d'un courant échangé entre le réseau électrique PDS et le convertisseur ACDC1.

Le système de contrôle 108 comporte en outre un module de contrôle CTRL1 conçu pour contrôler le convertisseur ACDC1 pour que le courant de quadrature de la machine MG1 suive la consigne d'entrée l'q_{cmd1}, à savoir la consigne Iq_{V}, Iq_{P} sélectionnée par le module de sélection 208 en l'absence de limitation par le limiteur 210.

Pour réaliser la régulation, le module de contrôle CTRL1 utilise par exemple une mesure I_{abc1}, par un dispositif de mesure 214, du courant échangé entre le convertisseur ACDC1 et la machine MG1 (le courant I_{abc1} peut regrouper plusieurs courants réels, par exemple les courants de phase, au nombre de trois pour une machine MG1 triphasée).

De façon similaire, le système de contrôle 108 comporte en outre par exemple un module de sélection 216 conçu pour sélectionner la consigne Iq_{V} lorsque la machine MG2 doit fonctionner en génératrice et la consigne Iq_{P} lorsque la machine MG2 doit fonctionner en moteur. Le module de sélection 216 fournit ainsi une consigne de courant Iq_{cmd2} égale à la consigne sélectionnée, c'est-à-dire soit la consigne Iq_{V} soit la consigne Iq_{P}.

Le système de contrôle 108 comporte en outre, comme pour le convertisseur ACDC1, un limiteur 218 (associé à un dispositif de mesure 219) et un module de contrôle CTRL2 conçu pour contrôler le convertisseur ACDC2 pour que le courant de quadrature de la machine MG2 suive la consigne d'entrée l'q_{cmd2}, à savoir la consigne Iq_{V}, Iq_{P} sélectionnée par le module de sélection 210 en l'absence de limitation par le limiteur 218.

Pour réaliser la régulation, le module de contrôle CTRL2 utilise par exemple une mesure I_{abc2}, par un dispositif de mesure 220, d'un courant échangé entre le convertisseur ACDC2 et la machine MG2 (le courant I_{abc2} peut regrouper plusieurs courants réels, par exemple les courants de phase, au nombre de trois pour une machine MG2 triphasée).

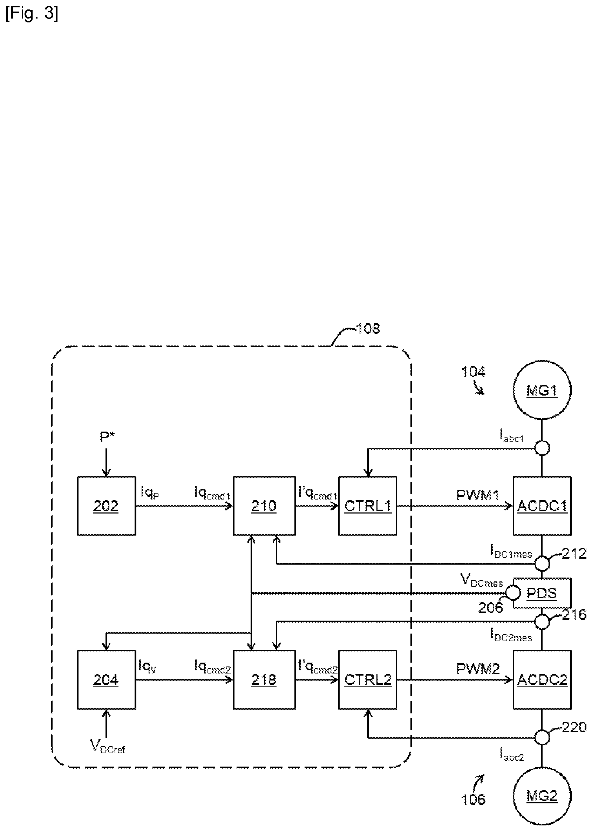

En référence à la figure 3, dans un deuxième mode de réalisation de l'invention, le système de contrôle 108 est conçu, indépendamment du sens de transfert de puissance, pour contrôler l'un des systèmes électromécaniques 104, 106 pour réguler la tension continue V_{DC} à la consigne V_{DCref} et pour contrôler l'autre système électromécanique 104, 106 pour réguler la puissance P à la consigne P*.

Autrement dit, il n'y a pas de basculement de régulation entre les deux systèmes électromécaniques. Dans ce cas, le système de contrôle 108 est alors conçu pour que la consigne de courant Iq_{P} soit appliquée directement comme consigne Iq_{cmd1} en entrée du limiteur 210 pour le contrôle de la machine MG1 ; et que la consigne en courant Iq_{V} soit appliquée directement comme consigne Iq_{cmd2} en entrée du limiteur 218 pour le contrôle de la machine MG2. Pour améliorer les performances de régulation de la tension continue V_{DC}, le système de contrôle 108 peut en outre être configuré pour prendre en compte la consigne de puissance P* dans l'élaboration de la consigne en courant iq_{V} par le module de consigne 204.

Ainsi, quel que soit le sens du transfert de puissance, un des systèmes électromécaniques 104, 106 réalise la régulation de la tension continue V_{DC} et l'autre système électromécanique 104, 106 réalise la régulation de la puissance P.

De préférence, comme illustré sur la figure 3, c'est le système électromécanique 104 associé au corps HP qui est dédié à la régulation de la puissance P, tandis que le système électromécanique 106 associé au corps BP est dédié à la régulation de la tension continue V_{DC}.

L'absence de basculement de régulation offre les deux avantages suivants.

Tout d'abord, comme les modules de contrôles CTRL1, CTRL2 présentent généralement un intégrateur, ce dernier peut être maintenu actif en permanence et il n'est plus nécessaire de gérer sa réinitialisation dès qu'une machine MG1, MG2 change de mode de fonctionnement. Ainsi la gestion des états des régulateurs s'en trouve grandement simplifiée et les problématiques de discontinuités de commande conduisant à des comportements transitoires inappropriés sont fortement éliminées.

En outre, par conception, cette architecture de contrôle est en mesure de s'adapter à tout le domaine de fonctionnement du système électrique avec ou sans consommateurs externes, en plus du transfert de puissance entre les deux corps HP, BP. Ce fonctionnement statique est plus robuste qu'une gestion par basculements d'états discrets face à des points de fonctionnement ou des événements singuliers qui n'auraient pas été anticipés lors de la conception.

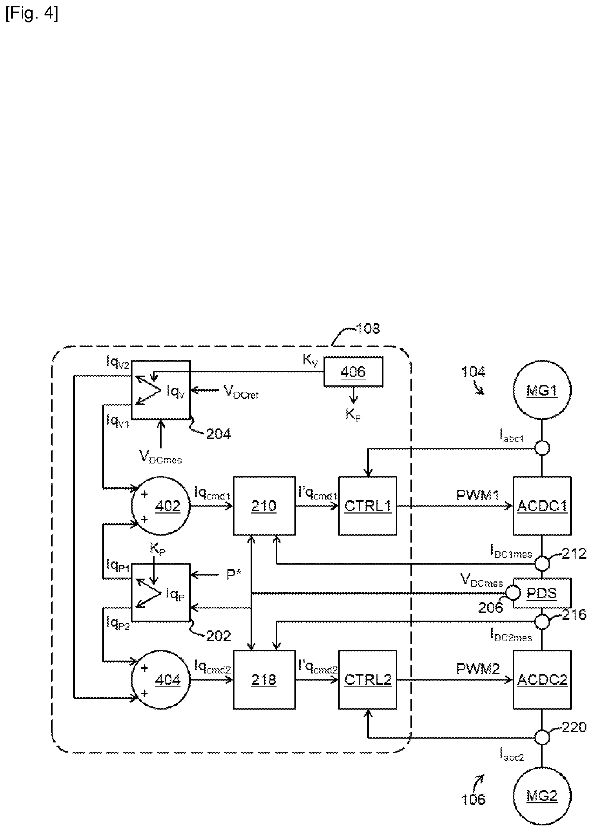

En référence à la figure 4, dans un troisième mode de réalisation de l'invention, le système de contrôle 108 est conçu pour contrôler les deux systèmes électromécaniques 104, 106 pour réguler la tension continue V_{DC} à la consigne V_{DCref} et/ou pour contrôler les deux systèmes électromécaniques 104, 106 pour réguler la puissance P à la consigne P*.

Par exemple, le module de consigne 204 est conçu pour diviser la consigne Iq_{V} en deux consignes partielles complémentaires Iq_{V1}, Iq_{V2}, de sorte que : Iq_{V} = Iq_{V1} + Iq_{V2}, respectivement destinées aux modules de contrôle CTRL1, CTRL2.

De façon similaire, le module de consigne 202 est en outre conçu pour diviser la consigne Iq_{P} en deux consignes partielles complémentaires Iq_{P1}, Iq_{P2}, de sorte que : Iq_{P} = Iq_{P1} + Iq_{P2}, respectivement destinées aux modules de contrôle CTRL1, CTRL2.

Le système de contrôle 108 peut alors comporter en outre un module d'addition 402 conçu pour additionner les consignes partielles Iq_{V1} et Iq_{P1} pour fournir la consigne d'entrée au module de contrôle CTRL1 : Iq_{cmd1} = Iq_{V1} + Iq_{P1}.

De façon similaire, le système de contrôle 108 peut en outre comporter un module d'addition 404 conçu pour additionner les consignes partielles Iq_{V2} et Iq_{P2} pour fournir la consigne d'entrée au module de contrôle CTRL1 : Iq_{cmd2} = Iq_{V2} + Iq_{P2}.

De préférence, le module de consigne 204 est conçu pour recevoir un coefficient de division K_{V} et pour diviser la consigne Iq_{V} à partir de ce coefficient de division K_{V}. Ainsi, les consignes partielles Iq_{V1}, Iq_{V2} sont par exemple données par : Iq_{V1} = K_{V}·Iq_{V} et Iq_{V2} = (1-K_{V})·Iq_{V}, avec K_{V} compris entre zéro et un, par exemple exprimé en pourcentage.

De même, le module de consigne 202 est de préférence conçu pour recevoir un coefficient de division K_{P} et pour diviser la consigne Iq_{P} à partir de ce coefficient de division K_{P}. Ainsi, les consignes partielles Iq_{P1}, Iq_{P2} sont par exemple données par : Iq_{P1} = K_{P}·Iq_{P} et Iq_{P2} = (1-K_{P})·Iq_{P}, avec K_{P} compris entre zéro et un, par exemple exprimé en pourcentage.

Ainsi, il est possible de modifier les coefficients K_{V}, K_{P} au cours du temps, par exemple en fonction de la phase de vol de l'aéronef 100 et/ou en fonction du sens de transfert de puissance. Les coefficients K_{V}, K_{P} peuvent également être modifiés en fonction d'un point de fonctionnement de la turbomachine (par exemple défini par la puissance fournie, la rotation N1, et la température T45), un état de fonctionnement des machines électriques MG1 et MG2 et de leur convertisseur, ou bien de la consigne de puissance P*, par exemple selon une loi de partage statique. Plus généralement, les coefficients K_{V} et K_{P} permettent de choisir entre plusieurs Iois de contrôle des machines électriques. Le choix de ces lois peut dépendre des pannes rencontrées et/ou de la situation de vol et/ou du point de fonctionnement de la turbomachine (par exemple : fonctionnement au ralenti, à puissance proche du maximum ou bien sur une limite d'une paramètre comme la température ou bien une vitesse de rotation).

Par exemple, le système de contrôle 108 comporte un module de répartition 406 conçu pour calculer les coefficients K_{V}, K_{P} en fonction de paramètres permettant d'identifier la phase de vol et/ou en fonction du sens de transfert de puissance. Dans ce dernier cas, les coefficients K_{V}, K_{P} peuvent respectivement être fixés à 0% et 100% et à 100% et 0%, suivant le sens de transfert, pour reproduire le contrôle de la figure 2.

De préférence, le module de répartition 406 est conçu pour faire évoluer les coefficients K_{V}, K_{P} à un taux pas trop élevée, par exemple inférieur à 100% par seconde. Ainsi, les effets transitoires liés à une évolution trop rapide peuvent être évités. En particulier, lorsque les coefficients K_{V}, K_{P} sont basculés entre 0% et 100% en sens contraire suivant le sens de transfert, pour reproduire le contrôle de la figure 2, la bascule peut être progressive et continue, pour ne pas entraîner d'effets transitoires intempestifs.

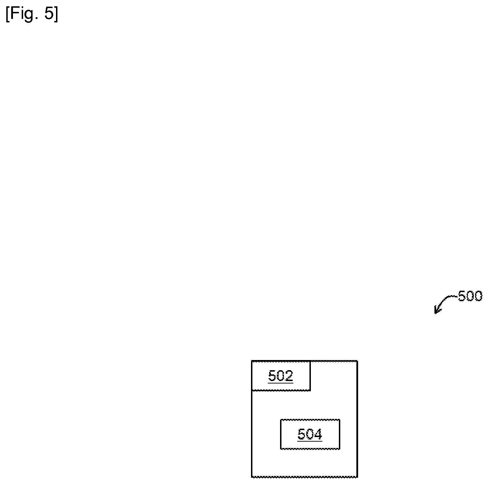

En référence à la figure 5, un exemple d'un procédé 500 de transfert de puissance pouvant être mis en oeuvre par l'installation 102 selon l'un quelconque des modes de réalisation précédents, va à présent être décrit.

Au cours d'une étape 502, l'installation 102 réalise un transfert de la puissance P au travers des premier et deuxième systèmes électromécaniques 104, 106 et du réseau électrique PDS.

Pendant ce transfert de puissance, au cours d'une étape 504, le système de contrôle 108 contrôle au moins l'un parmi les premier et deuxième systèmes électromécaniques 104, 106 afin de réguler la puissance (P) transférée et contrôle au moins l'autre parmi les premier et deuxième systèmes électromécaniques 104, 106 afin de réguler la tension continue VDC.

En conclusion, on notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, dans une première mise en œuvre possible, l'unité de régulation de la turbomachine EECU peut être utilisée pour calculer et fournir la consigne de puissance P* à transférer entre les arbres HP et BP. Cette fonction vient naturellement puisqu'elle utilise les paramètres de contrôle classiques utilisés pour la régulation de la turbomachine (N1, N2, T45, etc.). En outre, le système de contrôle 108 peut être réalisé dans un dispositif dédié, comme par exemple une unité de contrôle de chacun des convertisseurs, telle qu'un MGCU (sigle de l'anglais « Motor Generator Control Unit »).

En outre, les machines électriques MG1, MG2 peuvent par exemple intégrer leur électronique de puissance propre (c'est-à-dire le convertisseur ACDC1, ACDC2, respectivement) et/ou les dispositifs 214, 220 respectifs de mesure des courants électriques I_{abc1}, I_{abc2}.

Dans une deuxième mise en œuvre possible, l'unité de régulation de la turbomachine réalise les éléments du système de contrôle 108 fournissant les consignes I'q_{cmd1}, I'q_{cmd2}. Il est en outre prévu deux unités de contrôle réalisant respectivement les deux modules de contrôle CTRL1, CTRL2, ainsi que, par exemple, respectivement les deux convertisseurs ACDC1, ACDC2.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure toutes les variantes dont la prévision est à la portée de l'homme de l'art en appliquant ses connaissances générales à la mise en œuvre de l'enseignement qui vient de lui être divulgué.

## Revendications

1. Installation (102) de transfert d'une puissance (P) entre un corps haute pression (HP) et un corps basse pression (BP) d'une turbomachine d'un aéronef, comportant :
- un réseau électrique (PDS) conçu pour présenter une tension continue ;
- un premier système électromécanique (104) connecté au réseau électrique (PDS) et couplé au corps haute pression (HP) ; et
- un deuxième système électromécanique (106) connecté au réseau électrique (PDS) et couplé au corps basse pression (BP) ;
**caractérisée en ce qu'**elle comporte en outre :
- un système de contrôle (108) conçu pour contrôler au moins l'un parmi les premier et deuxième systèmes électromécaniques (104, 106) afin de réguler la puissance (P) transférée et pour contrôler au moins l'autre parmi les premier et deuxième systèmes électromécaniques (104, 106) afin de réguler la tension continue.

2. Installation (102) selon la revendication 1, dans laquelle le système de contrôle (108) est conçu, d'une part, lorsque la puissance est transférée du corps haute pression (HP) au corps basse pression (BP), pour contrôler uniquement le premier système électromécanique (104) afin de réguler la puissance (P) transférée et uniquement le deuxième système électromécanique (106) afin de réguler la tension continue et, d'autre part, lorsque la puissance est transférée du corps basse pression (BP) au corps haute pression (HP), pour contrôler uniquement le deuxième système électromécanique (106) afin de réguler la puissance (P) transférée et uniquement le premier système électromécanique (104) afin de réguler la tension continue.

3. Installation (102) selon la revendication 1, dans laquelle le système de contrôle (108) est conçu pour contrôler uniquement l'un parmi les premier et deuxième systèmes électromécaniques (104, 106) afin de réguler la puissance (P) transférée et pour contrôler uniquement l'autre parmi les premier et deuxième systèmes électromécaniques (104, 106) afin de réguler la tension continue, aussi bien lorsque la puissance (P) est transférée du corps haute pression (HP) au corps basse pression (BP) que lorsque la puissance (P) est transférée du corps basse pression (BP) au corps haute pression (HP).

4. Installation (102) selon la revendication 3, dans laquelle le système de contrôle (108) est conçu pour contrôler uniquement le premier système électromécanique (104) afin de réguler la puissance (P) transférée et pour contrôler uniquement le deuxième système électromécanique (106) afin de réguler la tension continue, aussi bien lorsque la puissance (P) est transférée du corps haute pression (HP) au corps basse pression (BP) que lorsque la puissance (P) est transférée du corps basse pression (BP) au corps haute pression (HP).

5. Installation (102) selon la revendication 1, dans laquelle le système de contrôle (108) est conçu pour contrôler les premier et deuxième systèmes électromécaniques (104, 106) afin de réguler la puissance transférée ou bien pour contrôler les premier et deuxième systèmes électromécaniques (104, 106) afin de réguler la tension réseau continue.

6. Installation (102) selon l'une quelconque des revendications 1 à 5, dans laquelle le premier système électromécanique (104) comporte un premier convertisseur électrique continu/alternatif (ACDC1) connecté au réseau électrique continu (PDS) et une première machine électrique (MG1) connectée au premier convertisseur électrique (ACDC1) et couplée au corps haute pression (HP), dans laquelle le système de contrôle (108) comporte un premier module de contrôle (CTRL1) conçu pour contrôler le premier convertisseur électrique continu/alternatif (ACDC1) à partir d'une consigne de courant (I'q_{cmd1}) de la première machine électrique (MG1), dans laquelle le deuxième système électromécanique (106) comporte un deuxième convertisseur électrique continu/alternatif (ACDC2) connecté au réseau électrique continu (PDS) et une deuxième machine électrique (MG2) connectée au deuxième convertisseur électrique (ACDC2) et couplée au corps basse pression (BP), et dans laquelle le système de contrôle (108) comporte un deuxième module de contrôle (CTRL2) conçu pour contrôler le deuxième convertisseur électrique continu/alternatif (ACDC2) à partir d'une consigne de courant (I'q_{cmd2}) de la deuxième machine électrique (MG2).

7. Installation (102) selon les revendications 5 et 6 prises ensemble, dans laquelle le système de contrôle (108) comporte :
- un premier module de consigne (204) conçu pour calculer des première et deuxième consignes partielles (Iq_{V1}, Iq_{V2}) de régulation de la tension réseau continue ;
- un deuxième module de consigne (202) conçu pour calculer des première et deuxième consignes partielles (Iq_{P1}, Iq_{P2}) de régulation de la puissance transférée ;
- un premier module d'addition (402) conçu pour additionner les deux premières consignes partielles (Iq_{V1}, Iq_{P1}) pour fournir une consigne de courant (Iq_{cmd1}) pour le premier module de contrôle (CTRL1) ; et
- un deuxième module d'addition (404) conçu pour additionner les deux deuxièmes consignes partielles (Iq_{V2}, Iq_{P2}) pour fournir une consigne de courant (Iq_{cmd2}) pour le deuxième module de contrôle (CTRL2).

8. Installation (102) selon la revendication 7, dans laquelle le premier module de consigne (202) est conçu pour recevoir un premier coefficient (K_{V}) pour calculer les première et deuxième consignes partielles (Iq_{V1}, Iq_{V2}) de régulation de la tension réseau continue et dans laquelle le deuxième module de consigne (204) est conçu pour recevoir un deuxième coefficient (K_{P}) pour calculer les première et deuxième consignes partielles (Iq_{P1}, Iq_{P2}) de régulation de la puissance (P) transférée, les premier et deuxième coefficients (K_{V}, K_{P}) pouvant varier dans le temps.

9. Aéronef comportant :
- une turbomachine comportant un corps haute pression (HP) et un corps basse pression (BP) ; et
- une installation (102) de transfert d'une puissance (P) entre le corps haute pression (HP) et le corps basse pression (BP), selon l'une quelconque des revendications 1 à 8.

10. Procédé (500) de transfert d'une puissance (P) entre un corps haute pression (HP) et un corps basse pression (BP) d'une turbomachine d'un aéronef, comportant :
- un transfert (502) de la puissance (P) au travers de premier et deuxième systèmes électromécaniques (104, 106) respectivement couplés au corps haute pression (HP) et au corps basse pression (BP) et d'un réseau électrique (PDS) conçu pour présenter une tension continue et auquel les premier et deuxième systèmes électromécaniques (104, 106) sont connectés ;
**caractérisé en ce qu'**il comporte en outre, pendant le transfert de la puissance (P) :
- un contrôle (504) d'au moins l'un parmi les premier et deuxième systèmes électromécaniques (104, 106) afin de réguler la puissance (P) transférée ; et
- un contrôle (504) d'au moins l'autre parmi les premier et deuxième systèmes électromécaniques (104, 106) afin de réguler la tension continue.

## Patentansprüche

1. Anlage (102) zur Übertragung einer Leistung (P) zwischen einem Hochdruckkörper (HP) und einem Niederdruckkörper (BP) eines Turbotriebwerks eines Luftfahrzeugs, umfassend:
- ein Stromnetz (PDS), das dafür ausgelegt ist, eine Gleichspannung aufzuweisen;
- ein erstes elektromechanisches System (104), das mit dem Stromnetz (PDS) verbunden und mit dem Hochdruckkörper (HP) gekoppelt ist; und
- ein zweites elektromechanisches System (106), das mit dem Stromnetz (PDS) verbunden und mit dem Niederdruckkörper (BP) gekoppelt ist;
**dadurch gekennzeichnet, dass** sie weiter umfasst:
- ein Steuersystem (108), das dafür ausgelegt ist, mindestens eines von dem ersten und dem zweiten elektromechanischen System (104, 106) zu steuern, um die übertragene Leistung (P) zu regeln, und mindestens das andere von dem ersten und dem zweiten elektromechanischen System (104, 106) zu steuern, um die Gleichspannung zu regeln.

2. Anlage (102) nach Anspruch 1, wobei das Steuersystem (108) dafür ausgelegt ist, einerseits, wenn die Leistung vom Hochdruckkörper (HP) zum Niederdruckkörper (BP) übertragen wird, nur das erste elektromechanische System (104) zu steuern, um die übertragene Leistung (P) zu regeln und nur das zweite elektromechanische System (106) zu steuern, um die Gleichspannung zu regeln, und andererseits, wenn die Leistung vom Niederdruckkörper (BP) zum Hochdruckkörper (HP) übertragen wird, nur das zweite elektromechanische System (106) zu steuern, um die übertragene Leistung (P) zu regeln und nur das erste elektromechanische System (104) zu steuern, um die Gleichspannung zu regeln.

3. Anlage (102) nach Anspruch 1, wobei das Steuersystem (108) dafür ausgelegt ist, nur eines von dem ersten und dem zweiten elektromechanischen System (104, 106) zu steuern, um die übertragene Leistung (P) zu regeln, und nur das andere von dem ersten und dem zweiten elektromechanischen System (104, 106) zu steuern, um die Gleichspannung zu regeln, sowohl wenn die Leistung (P) vom Hochdruckkörper (HP) zum Niederdruckkörper (BP) übertragen wird, als auch wenn die Leistung (P) vom Niederdruckkörper (BP) zum Hochdruckkörper (HP) übertragen wird.

4. Anlage (102) nach Anspruch 3, wobei das Steuersystem (108) dafür ausgelegt ist, nur das erste elektromechanische System (104) zu steuern, um die übertragene Leistung (P) zu regeln, und nur das zweite elektromechanische System (106) zu steuern, um die Gleichspannung zu regeln, sowohl wenn die Leistung (P) vom Hochdruckkörper (HP) zum Niederdruckkörper (BP) übertragen wird, als auch wenn die Leistung (P) vom Niederdruckkörper (BP) zum Hochdruckkörper (HP) übertragen wird.

5. Anlage (102) nach Anspruch 1, wobei das Steuersystem (108) dafür ausgelegt ist, das erste und das zweite elektromechanische System (104, 106) zu steuern, um die übertragene Leistung zu regeln, oder das erste und das zweite elektromechanische System (104, 106) zu steuern, um die Netzgleichspannung zu regeln.

6. Anlage (102) nach Anspruch 1 bis 5, wobei das erste elektromechanische System (104) einen ersten elektrischen Gleichstrom-/Wechselstrom-Wandler (ACDC1), der mit dem Gleichstromnetz (PDS) verbunden ist, und eine erste elektrische Maschine (MG1) umfasst, die mit dem ersten elektrischen Wandler (ACDC1) verbunden und mit dem Hochdruckkörper (HP) gekoppelt ist, wobei das Steuersystem (108) ein erstes Steuermodul (CTRL1) umfasst, das dafür ausgelegt ist, den ersten elektrischen Gleichstrom-/Wechselstrom-Wandler (ACDC1) anhand eines Stromsollwerts (l'q_{cmd1}) der ersten elektrischen Maschine (MG1) zu steuern, wobei das zweite elektromechanische System (106) einen zweiten elektrischen Gleichstrom-/Wechselstrom-Wandler (ACDC2), der mit dem Gleichstromnetz (PDS) verbunden ist, und eine zweite elektrische Maschine (MG2) umfasst, die mit dem zweiten elektrischen Wandler (ACDC2) verbunden und mit dem Niederdruckkörper (BP) gekoppelt ist, und wobei das Steuersystem (108) ein zweites Steuermodul (CTRL2) umfasst, das dafür ausgelegt ist, den zweiten elektrischen Gleichstrom-/Wechselstrom-Wandler (ACDC2) anhand eines Stromsollwerts (l'q_{cmd2}) der zweiten elektrischen Maschine (MG2) zu steuern.

7. Anlage (102) nach Anspruch 5 und 6 zusammengenommen, wobei das Steuersystem (108) umfasst:
- ein erstes Sollwertmodul (204), das dafür ausgelegt ist, einen ersten und einen zweiten Teilsollwert (lq_{V1}, Iq_{V2}) zur Regelung der Netzgleichspannung zu berechnen;
- ein zweites Sollwertmodul (202), das dafür ausgelegt ist, einen ersten und einen zweiten Teilsollwert (lq_{P1}, Iq_{P2}) zur Regelung der übertragenen Leistung zu berechnen;
- ein erstes Additionsmodul (402), das dafür ausgelegt ist, die ersten beiden Teilsollwerte (lq_{V1}, lq_{P1}) zu addieren, um einen Stromsollwert (Iq_{cmd1}) für das erste Steuermodul (CTRL1) bereitzustellen; und
- ein zweites Additionsmodul (404), das dafür ausgelegt ist, die beiden zweiten Teilsollwerte (Iq_{V2}, Iq_{P2}) zu addieren, um einen Stromsollwert (Iq_{cmd2}) für das zweite Steuermodul (CTRL2) bereitzustellen.

8. Anlage (102) nach Anspruch 7, wobei das erste Sollwertmodul (202) dafür ausgelegt ist, einen ersten Koeffizienten (K_{V}) zu empfangen, um den erste und den zweite Teilsollwert (lq_{V1}, Iq_{V2}) zur Regelung der Netzgleichspannung zu berechnen, und wobei das zweite Sollwertmodul (204) dafür ausgelegt ist, einen zweiten Koeffizienten (K_{P}) zu empfangen, um den erste und zweiten Teilsollwert (lq_{P1}, Iq_{P2}) zur Regelung der übertragenen Leistung (P) zu berechnen, wobei der erste und der zweite Koeffizient (K_{V}, K_{P}) zeitlich variieren können.

9. Luftfahrzeug, umfassend:
- ein Turbotriebwerk, das einen Hochdruckkörper (HP) und einen Niederdruckkörper (BP) umfasst; und
- eine Anlage (102) zur Übertragung einer Leistung (P) zwischen dem Hochdruckkörper (HP) und dem Niederdruckkörper (BP), nach einem der Ansprüche 1 bis 8.

10. Verfahren (500) zur Übertragung einer Leistung (P) zwischen einem Hochdruckkörper (HP) und einem Niederdruckkörper (BP) eines Turbotriebwerks eines Luftfahrzeugs, umfassend:
- eine Übertragung (502) der Leistung (P) über ein erstes und ein zweites elektromechanisches System (104, 106), die jeweils mit dem Hochdruckkörper (HP) und dem Niederdruckkörper (BP) gekoppelt sind, und über ein Stromnetz (PDS), das dafür ausgelegt ist, eine Gleichspannung bereitzustellen, und mit dem das erste und das zweite elektromechanische System (104, 106) verbunden sind;
**dadurch gekennzeichnet, dass** sie während der Leistungsübertragung (P) weiter umfasst:
- eine Steuerung (504) von mindestens einem von dem ersten und dem zweiten elektromechanischen System (104, 106), um die übertragene Leistung (P) zu regeln; und
- eine Steuerung (504) von mindestens dem anderen von dem ersten und dem zweiten elektromechanischen System (104, 106), um die Gleichspannung zu regeln.

## Claims

1. An installation (102) for transferring power (P) between a high-pressure (HP) body and a low-pressure (BP) body of a turbine engine of an aircraft, comprising:
- an electrical network (PDS) designed to have a DC voltage;
- a first electromechanical system (104) connected to the electrical network (PDS) and coupled to the high-pressure body (HP); and
- a second electromechanical system (106) connected to the electrical network (PDS) and coupled to the low-pressure body (BP);
**characterized in that** it further comprises:
- a control system (108) designed to control at least one of the first and second electromechanical systems (104, 106) so as to regulate the transferred power (P) and to control at least the other of the first and second electromechanical systems (104, 106) so as to regulate the DC voltage.

2. The installation (102) according to claim 1, wherein the control system (108) is designed, on the one hand, when power is transferred from the high-pressure body (HP) to the low-pressure body (BP), to control only the first electromechanical system (104) so as to regulate the transferred power (P) and only the second electromechanical system (106) so as to regulate the DC voltage and, on the other hand, when the power is transferred from the low-pressure body (BP) to the high-pressure body (HP), to control only the second electromechanical system (106) so as to regulate the transferred power (P) and only the first electromechanical system (104) so as to regulate the DC voltage.

3. The installation (102) according to claim 1, wherein the control system (108) is designed to control only one of the first and second electromechanical systems (104, 106) so as to regulate the transferred power (P) and to control only the other of the first and second electromechanical systems (104, 106) so as to regulate the DC voltage, both when the power (P) is transferred from the high-pressure body (HP) to the low-pressure body (BP) and when the power (P) is transferred from the low-pressure body (BP) to the high-pressure body (HP).

4. The installation (102) according to claim 3, wherein the control system (108) is designed to control only the first electromechanical system (104) so as to regulate the transferred power (P) and to control only the second electromechanical system (106) so as to regulate the DC voltage, both when the power (P) is transferred from the high-pressure body (HP) to the low-pressure body (BP) and when the power (P) is transferred from the low-pressure body (BP) to the high-pressure body (HP).

5. The installation (102) according to claim 1, wherein the control system (108) is designed to control the first and second electromechanical systems (104, 106) so as to regulate the transferred power or to control the first and second electromechanical systems (104, 106) so as to regulate the DC network voltage.

6. The installation (102) according to any one of claims 1 to 5, wherein the first electromechanical system (104) comprises a first DC/AC electrical converter (ACDC1) connected to the DC electrical network (PDS) and a first electrical machine (MG1) connected to the first electrical converter (ACDC1) and coupled to the high-pressure body (HP), wherein the control system (108) comprises a first control module (CTRL1) designed to control the first DC/AC electrical converter (ACDC1) on the basis of a current setpoint (l'q_{cmd1}) of the first electrical machine (MG1), wherein the second electromechanical system (106) comprises a second DC/AC electrical converter (ACDC2) connected to the DC electrical network (PDS) and a second electrical machine (MG2) connected to the second electrical converter (ACDC2) and coupled to the low-pressure body (BP), and wherein the control system (108) comprises a second control module (CTRL2) designed to control the second DC/AC electrical converter (ACDC2) on the basis of a current setpoint (l'q_{cmd2}) of the second electrical machine (MG2).

7. The installation (102) according to claims 5 and 6 taken together, wherein the control system (108) comprises:
- a first setpoint module (204) designed to calculate first and second partial setpoints (Iqᵥ₁, Iqᵥ₂) for regulating the DC network voltage;
- a second setpoint module (202) designed to calculate first and second partial setpoints (Iq_{P1}, Iq_{P2}) for regulating the transferred power;
- a first addition module (402) designed to add the two first partial setpoints (Iq_{V1}, Iq_{P1}) to provide a current setpoint (lq_{cmd1}) for the first control module (CTRL1); and
- a second addition module (404) designed to add the two second partial setpoints (Iq_{V2}, Iq_{P2}) to provide a current setpoint (lq_{cmd2}) for the second control module (CTRL2).

8. The installation (102) according to claim 7, wherein the first setpoint module (202) is designed to receive a first coefficient (Kv) for calculating the first and second partial setpoints (Iq_{V1}, Iq_{V2}) for regulating the DC network voltage and wherein the second setpoint module (204) is designed to receive a second coefficient (K_{P}) for calculating the first and second partial setpoints (Iq_{P1}, Iq_{P2}) for regulating the transferred power (P), the first and second coefficients (K_{V}, K_{P}) being able to vary over time.

9. An aircraft comprising:
- a turbine engine comprising a high-pressure (HP) body and a low-pressure (BP) body; and
- an installation (102) for transferring power (P) between the high-pressure body (HP) and the low-pressure body (BP), according to any one of claims 1 to 8.

10. A method (500) for transferring power (P) between a high-pressure body (HP) and a low-pressure body (BP) of a turbine engine of an aircraft, the method comprising:
- a transfer (502) of the power (P) through first and second electromechanical systems (104, 106) respectively coupled to the high-pressure body (HP) and the low-pressure body (BP) and an electrical network (PDS) designed to have a DC voltage and to which the first and second electromechanical systems (104, 106) are connected;
- **characterized in that** it further comprises, during the transfer of power (P):
- a control (504) of at least one of the first and second electromechanical systems (104, 106) so as to regulate the transferred power (P); and
- a control (504) of at least the other of the first and second electromechanical systems (104, 106) so as to regulate the DC voltage.
